# EUROPEAN PATENT APPLICATION

(11) **EP 2 942 262 A2**
(43) Date of publication of application: **11.11.2015**
(21) Application number: 15166876.1
(22) Date of filing: 08.05.2015
(51) Int. Cl.: B62B 3/00

(54) **CONTAINER**

(30) Priority: 08.05.2014 GB 201408162
(71) Applicant: K. Hartwall Oy AB, 01150 Söderkulla (FI)
(72) Inventor: Järvi, Mikko, 01150 Söderkulla (FI)
(74) Representative: Seppo Laine Oy

(57) **Abstract**

According to an example aspect of the present invention, there is provided a novel container (1), which includes a first side frame section (200), a door (100) and a hinge (600), which is configured to pivot the door (100) in respect to the side frame section (200) about a vertical axis for turning the door (100) between a closed state and an open state. The door (100) includes a door frame (140), which is connected to the side frame section (200) of the container (1) through the hinge (600). The door (100) has a first panel (110), which is fixed to the door frame (140), and a second panel (120), which is pivotably connected to the first panel (110) and configured to be articulated about a horizontal rotation axis between a closed orientation and an open orientation.

## Description

### FIELD

The present invention relates to logistics equipment. In particular, the invention relates to containers for transporting parceled goods, such as letters and small boxes sent by mail. More specifically, the invention relates to a container according to the preamble portion of claim 1.

### BACKGROUND

Before delivery to the recipient, mail and generally speaking all logistics items are transported in consolidated units. There are known a vast variety of containers for facilitating such bulk transports. In mail logistics at least, roll containers are the *de facto* solution for transporting letters and packages between and within hubs before the parcel is delivered to the recipient.

Conventional containers include three fixed wall sections and a door, which covers the fourth lateral side of the container. Both the fixed wall sections and the door feature a peripheral frame surrounding a mesh tight enough to safely keep all contents within the container.

A problem associated with conventional roll containers is that when the door is opened, the contents of the container tend to fall out in an uncontrolled manner. The problem is most prominent in mail transport, wherein the letters are stacked on top of each other such that they can easily slide off the container thus creating a large spill.

To address this problem, roll containers have been developed with two independent doors, which are arranged in a superposed configuration. Both doors are vertically hinged to the front edge of the same side frame section such that the hinges enable also vertical displacement for locking the door to the opposing frame section. The top door may therefore be opened independently of the lower door. However, for allowing the lower door to be opened, there has to be clearance between the upper edge of the lower door and the lower edge of the upper door for allowing the lower door to be lifted of a hook for suspending the door to the side frame section. While the double door approach does reduce the number of letters sliding out, such approach has the problem of letters sliding out through the clearance between the doors.

It is therefore an aim of the present invention to provide a container for the transport of small parceled items - particularly letters - that would solve the problem of managing the contents the container, when the door is opened for unloading of the container.

### SUMMARY OF THE INVENTION

The invention is defined by the features of the independent claims. Some specific embodiments are defined in the dependent claims.

According to a first aspect, there is provided a novel container including a first side frame section, a door and a hinge, which is configured to pivot the door in respect to the side frame section about a vertical axis for turning the door between a closed state and an open state. The door includes a door frame, which is connected to the side frame section of the container through the hinge. The door has a first panel, which is fixed to the door frame, and a second panel, which is pivotably connected to the first panel and configured to be articulated about a horizontal rotation axis between a closed orientation and an open orientation.

Considerable benefits are gained with aid of the proposed container. Because the door may be opened sequentially from top to bottom, small items are less likely to pour out of the roll container. The use of individual and separate hinges between the door frame and the side frame section as well as between the panels delimited by the door frame enable the possibility to use quiet hinges between the elements, which may be required to satisfy occupational safety standards. The panels may therefore also be sealed against the surrounding or delimiting door frame for sound proofing purposes and for secure transport of small items. As the door is hinged to the side frame section from the door frame, the entire door may also be opened by turning the door against the side of the container. The novel door construction therefore facilitates the loading an especially unloading of small and large items alike.

### BRIEF DESCRIPTION OF THE DRAWINGS

In the following, exemplary embodiments of the invention are described in greater detail with reference to the accompanying drawings in which:
FIGURE 1 illustrates an isometric view of a roll container according to one embodiment in a fully closed state;
FIGURE 2 illustrates an isometric view of the roll container of FIGURE 1 with the top panel of the door open, i.e. folded down,
FIGURE 3 illustrates an isometric view of the roll container of FIGURE 1 with the top and center panel of the door open, i.e. folded down,
FIGURE 4 illustrates an isometric view of the roll container of FIGURE 1 with the door opened to flank the side frame sections such that the panels are closed,
FIGURE 5 illustrates an isometric view of the roll container of FIGURE 1 with the door opened to flank the side frame sections such that and panels are open, i.e. folded down,
FIGURE 6 illustrates a partly sectional detail view of the door locking mechanism of the roll container of FIGURE 1,
FIGURE 7 illustrates a top view of the roll container of FIGURE 1 in an opened state,
FIGURE 8 illustrates a detail view of the door of FIGURE 7,
FIGURE 9 illustrates a top view of the roll container of FIGURE 1 in a closed state,
FIGURE 10 illustrates a detail view of area A of FIGURE 9,
FIGURE 11 illustrates a detail view of area B of FIGURE 9, and
FIGURE 12 illustrates a detail view of the relationship between a partially opened door with a partially opened top panel.

### EMBODIMENTS

In a broad sense, embodiments are based on the idea of providing a container door with a frame having a fixed bottom panel and one movable panel hinged to the top edge of the bottom panel. The door may include additional movable panels, each hinged to the top edge of the panel below. The panels of the door are fitted to the door frame, which is hinged to a side frame section of the container. Accordingly, small items are less likely to pour out of the roll container upon unloading as the door may be opened sequentially from top to bottom.

As illustrated in the accompanying drawings, a container 1 according to one embodiment takes the form of a roll container. While the features of the container 1 are herein described in connection with a roll container, the novel door arrangement would be equally applicable to any container without any modification to the underside of the container.

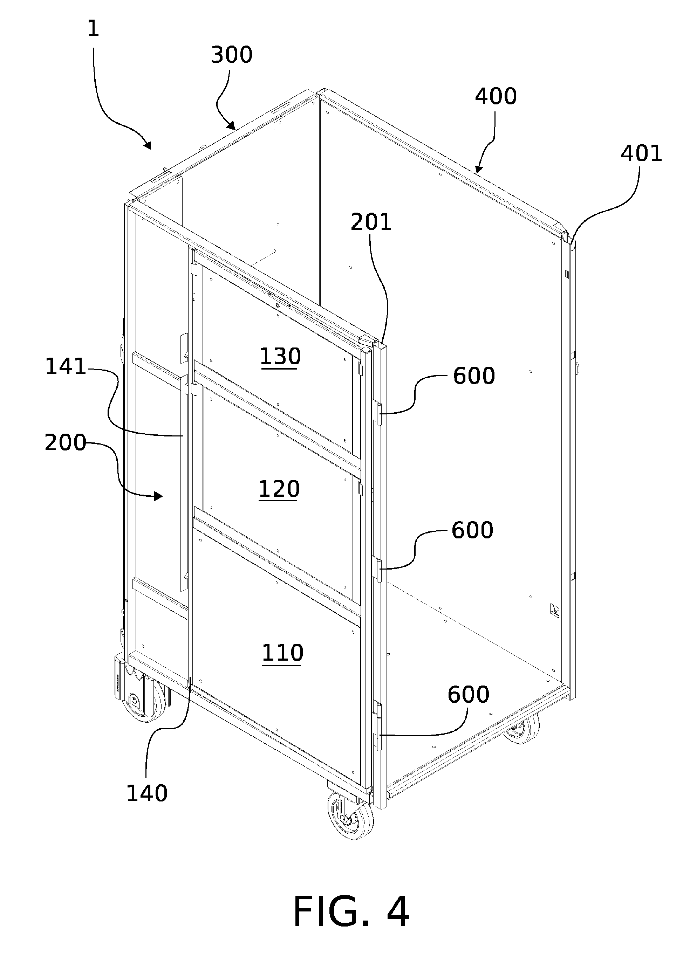

The container 1 includes four major components: a first side frame section 200, a second side frame section 400 on the opposite side of the container 1 to the first side frame sections 200, a back frame section 300 connecting the first and second side frame sections 200, 400 at the back of the container 1 and a door 100 provided to the front of the container 1 and connecting the first and second side frame sections 200, 400 in the closed state. The door 100 is connected to the first side frame section 200 via a hinge 600, which pivots the door 100 in respect to the side frame section 200 about a vertical axis for turning the door 100 between a closed state and an open state through intermediate positions there between. More specifically, the door 100 includes a door frame 140, which is connected to the side frame section 200 of the container 1 through the hinge 600. The hinge 600 particularly connects the door frame 140 to the front profile 201 of the first side frame section 200 (FIGURE 4).

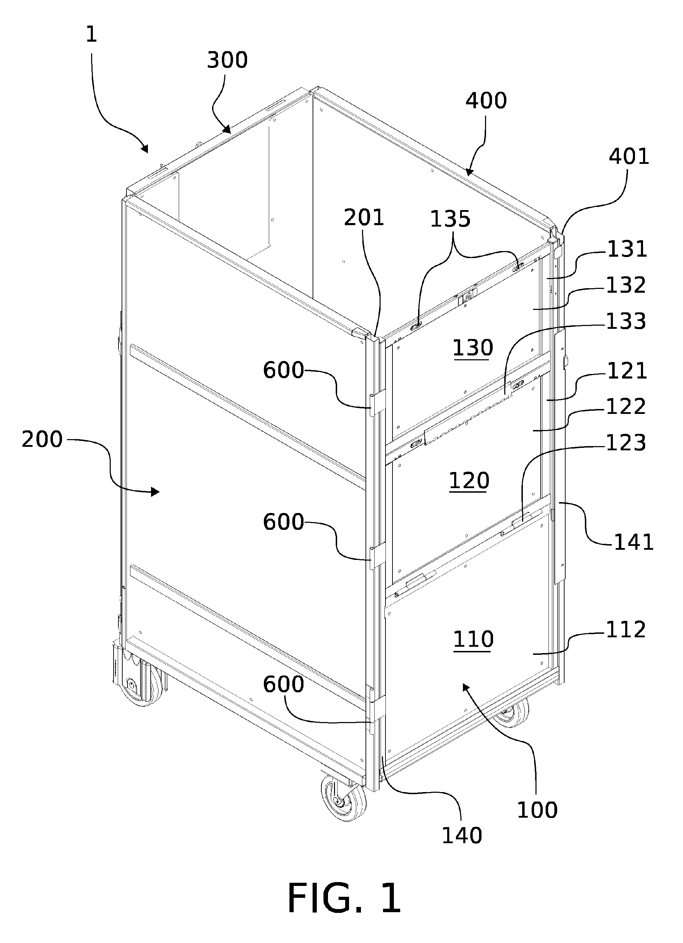

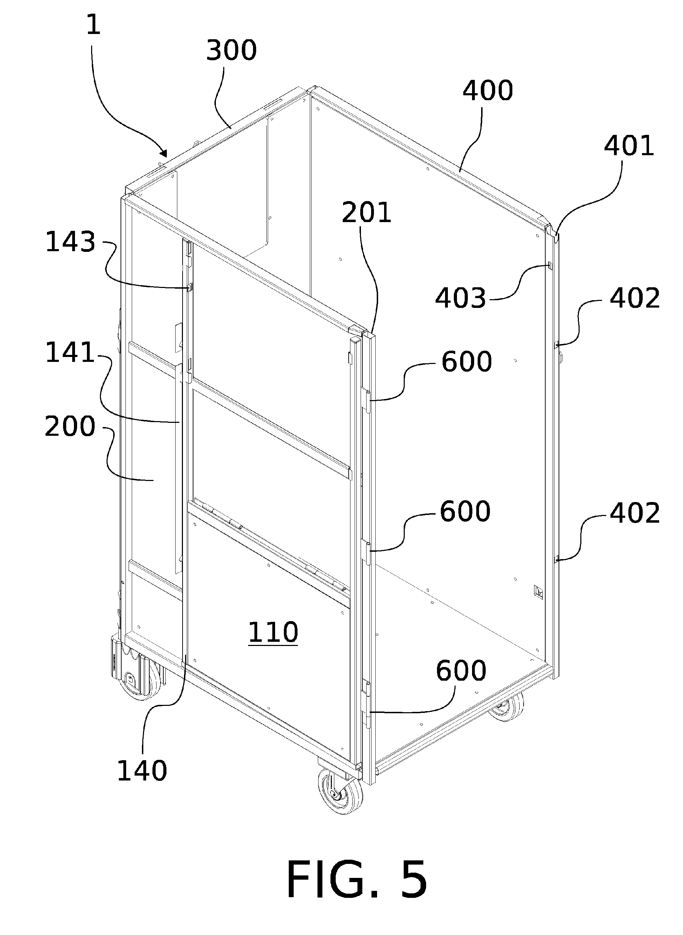

In the closed state, the door 100 extends between the first and second side frame section 200, 400 (FIGURES 1 to 3). The door frame 140 is then connected to the front profiles 201, 401 of the side frame sections 200, 400 so as to sufficiently seal the door 100 for preventing the items in the container from escaping through gaps between the door 100 and the surrounding side frame sections 200, 400. In the opened state, the door 100 is turned to extend parallel to the first side frame section 200, i.e. to flank the first side frame section 200 (FIGURES 4 and 5).

In the exemplary embodiment shown in the FIGURES, the door 100 has three panels 110, 120, 130. The first panel 110 is fixed to the door frame 140, which delimits the first panel 110 from both sides and from below. The first panel 110 includes a cover 112, which extends between the lateral and bottom portions of the door frame 140. The cover 112 may be a plywood, metal mesh, composite, plastic or similar panel for closing the bottom section of the door 100. The cover is preferably self-supporting. The first panel 110 also preferably includes a top frame portion for the purpose of acting as a hinge point for a superposed second panel 120. The top frame portion may be of reinforcing material, such as metal. The use of a rigid material is especially preferable in embodiments, where the cover 112 is made of an elastic material, such as plastic or tarpaulin material. FIGURE 1 illustrates a closed first panel 110 in the closed state of the door 100, whereas FIGURE 5 shows a closed first panel 110 in the opened state of the door 100.

The door 100 also includes a second panel 120, which is pivotably connected to the first panel 110 (FIGURE 1). The second panel 120 has a frame 121, which is dimensioned to fit between the lateral sections of the door frame 140. The frame 121 also surrounds a cover 122. The cover 122 of the second panel 120 may be similar to that of the first panel 110. The second panel 120 is articulated in respect to the first panel 100 about a horizontal rotation axis between a closed orientation and an open orientation. The articulation is established through a hinge 123 connecting the frame 121 of the second panel, namely the bottom section of the frame 121, to the first panel 110, preferably to the top frame portion thereof. FIGURE 1 shows the second panel 120 in a closed state, in which the second panel 120 extends upwardly from the first panel 110. In the closed state, the second panel 120 thus extends in the same plane as the first panel 110. Indeed, all panels of the roll container 1 are delimited by the door frame 140 in the closed orientation of the panels.

The frame 121 of the second panel 120 also includes a panel release mechanism, which releasably engages with the door frame 140 for securing the second panel 120 to and releasing it from the closed orientation. The panel release mechanism is preferably arranged to inside the hollow top section of the frame 121 of the second panel. FIGURE 1 shows release latches 135 visible through openings provided to the top section of the frame 121. The operating principle and construction of the panel release mechanism is described hereafter in connection with the discussion of the third panel 130.

The first and second panel 110, 120 may be provided with detachable and cooperating connectors, such as magnetic couplers, Velcro fasteners, or similar, for securing two hinged panels in respect to each other in the open position, in which mutually parallel panels maintain their respective position. More specifically, the front surface of the panels may include for example magnets, which are aligned when the second panel 120 is opened to flank the first panel 110. The releasable connection between the panels benefits the maneuverability of the door 100 in the different states.

As mentioned briefly above, the container 1 shown in the FIGURES contains an additional and optional third panel 130. The third panel 130 is pivotably connected to the second panel 120. The pivoted connection is established with a hinge 133, which connects the bottom section of the frame 131 of the third panel 130 to the top section of the frame 121 of the second panel 120. The third panel 130 may be constructed similarly to the second panel 120. Accordingly, the third panel 130 may be pivoted in respect to the second panel 120 about a horizontal rotation axis between a closed orientation, in which the third panel 130 extends in the same plane as the second panel 120, and an open orientation, in which the third panel 130 is turned to flank the second panel 120.

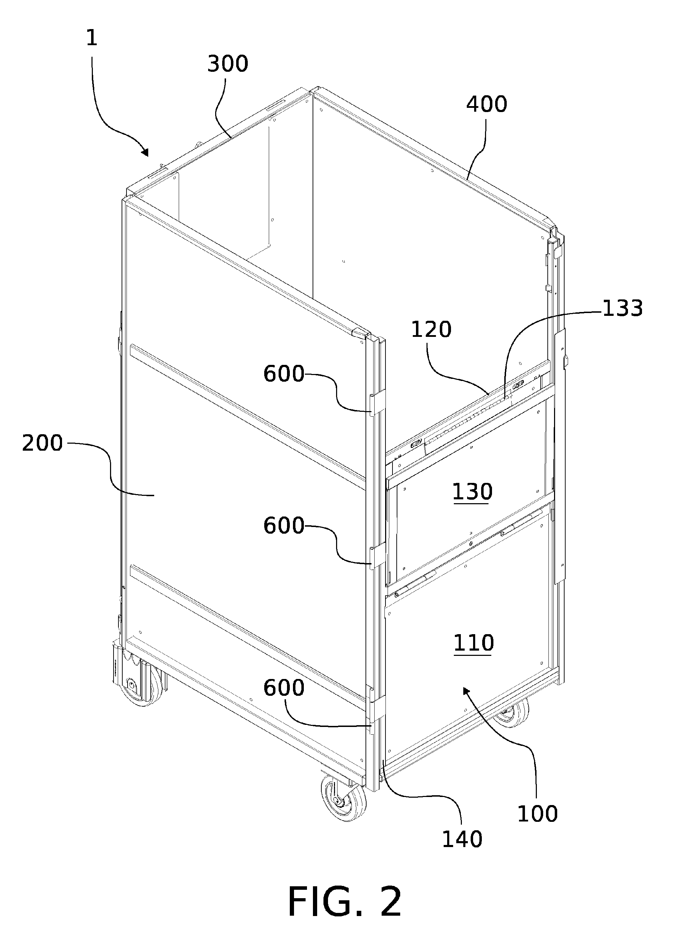

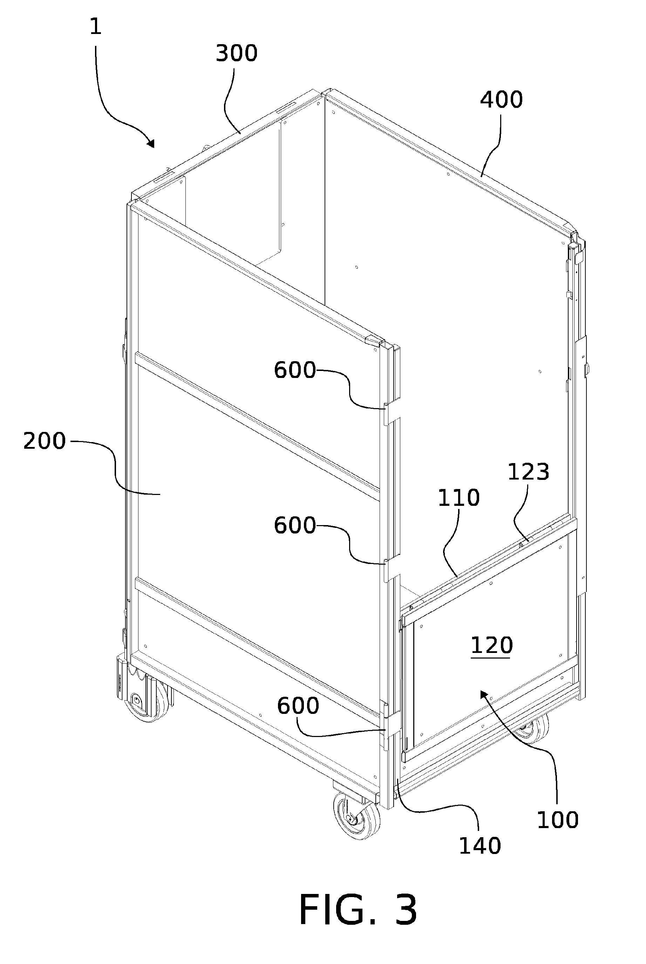

The hinge 133 allowing the third panel 130 to be rotated between the closed and open orientation preferably forces the third panel 130 to turn outward, i.e. away from the back frame section 300. The hinge 133 between the second and third panel 120, 130 is also preferably configured to have minimal offset between the panels 120, 130. FIGURE 1 shows a flat hinge as one exemplary configuration. The minimal offset brings the third panel 130 close to the second panel 120 in the open orientation (FIGURE 2). Conversely, the hinge 123 between the first and second panel 120 is configured to include more offset than the afore-mentioned hinge 133. The increased offset provides clearance to pivot the second and third panel 120, 130 together about the hinge 123 (FIGURES 2 and 3). In the state of FIGURE 3, the third panel is folded between the first panel and second panel 120, which is thus visible from the outside.

With the construction explained above, the door 100 has two primary states (open and closed) both having three sub-states dictated by the orientation of the second and third panel 120, 130. FIGURE 2 shows the container 1 with the door 100 closed and only the third panel 130 opened, i.e. folded down. FIGURE 3 shows the container 1 with the door 100 closed and both movable panels 120, 130 opened, i.e. folded down. FIGURE 4 shows the container 1 with the door 100 opened and all panels 110, 120, 130 closed. FIGURE 5 shows the container 1 with the door 100 opened and both movable panels 120, 130 opened, i.e. folded down.

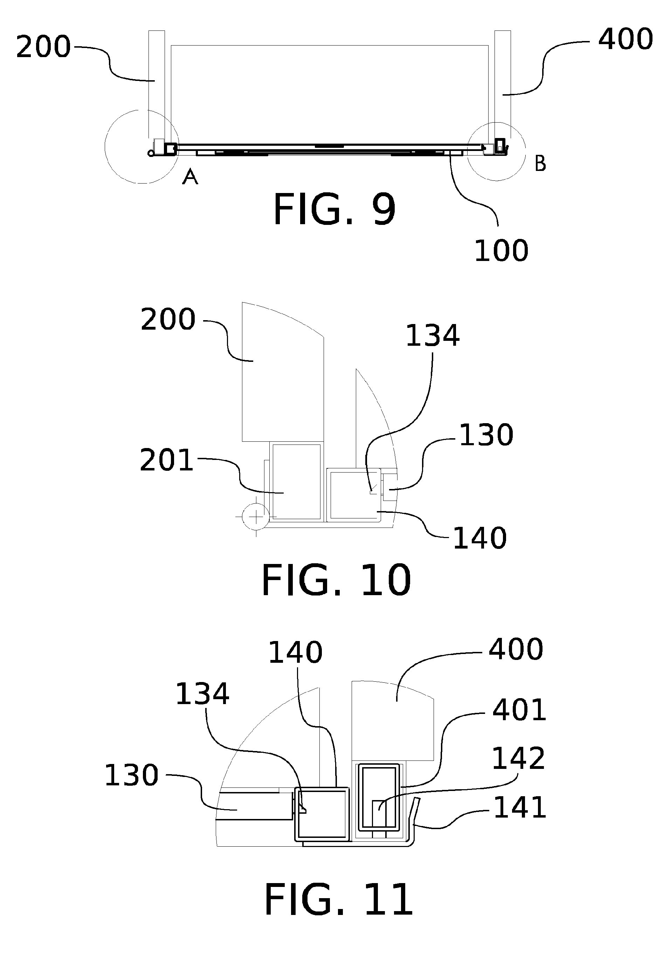

FIGURES 9 to 11 show the operating principle of the panel release mechanism in greater detail. While the panel release mechanism is described in connection with the third panel 130, a similar mechanism is applicable to and preferably also used on the second panel 120. The release latch shown 135 in FIGURE 1 runs in the hollow top profile of the frame 131 of the third panel 130 and terminates to the affixer 134 shown in FIGURES 10 and 11. The affixer 134 is a claw-like member, which may be moved along the profile of the frame 131 by moving the release latch 135 in the same direction. The door frame 140 includes an opening for releasably receiving and holding the affixer 134 of the third panel 130 for securing the panel to and releasing it from the closed orientation. FIGURES 10 and 11 show the third panel 130 in closed orientation, wherein the affixers 134 are held in the receptive opening on the door frame 140. The panel release mechanism preferably includes a biasing member, such as a spring with suitable retainers, for biasing the affixers 134 laterally such that the panel is released from the closed orientation by moving the release latches 135 enough to exceed the holding threshold of the biasing member to disengage the affixer 134 from the corresponding opening.

The door 100 also includes a door release mechanism 700 for locking the door 100 into and releasing from the closed state. The locking mechanism 700 is arranged to the front frame profile 401 of the second side frame section 400 such to be manipulated between a locking position and a releasing position for locking the door into the closed state and releasing it, respectively. The door frame 140 has a locking member 142 and the door release mechanism 700 has a counterpart member 701. The counterpart member 701 is set to engage with the locking member 142 of the door frame 140 in the locking position of the door release mechanism 700 and to release the locking member 142 in the releasing position of the door release mechanism 700. The counterpart member 701 is specifically a slide, which is set to run in and along the main extending direction of the front frame profile 401 of the second frame section 400. In the illustrated embodiment, the counterpart member 701 takes the form of a slide. The slide 701 is visible through an opening 402 on the front profile 401 of the second side frame section 400. The slide 701 also has a corresponding opening 703, which aligns with the opening 402 of the front frame profile 401 in the releasing position and which is deviated from the opening 402 of the front frame profile 401 in the locking position of the slide 701.

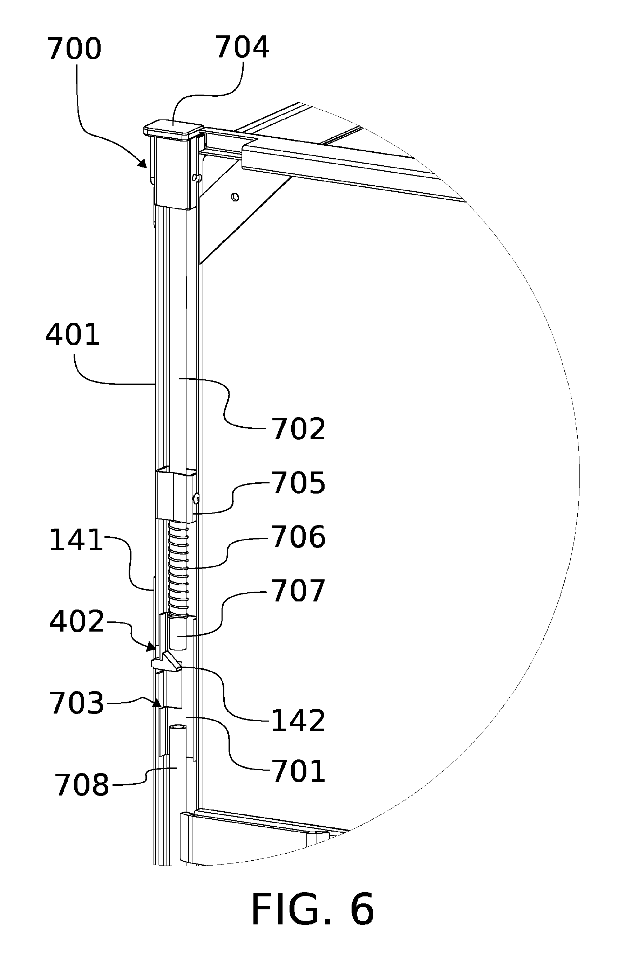

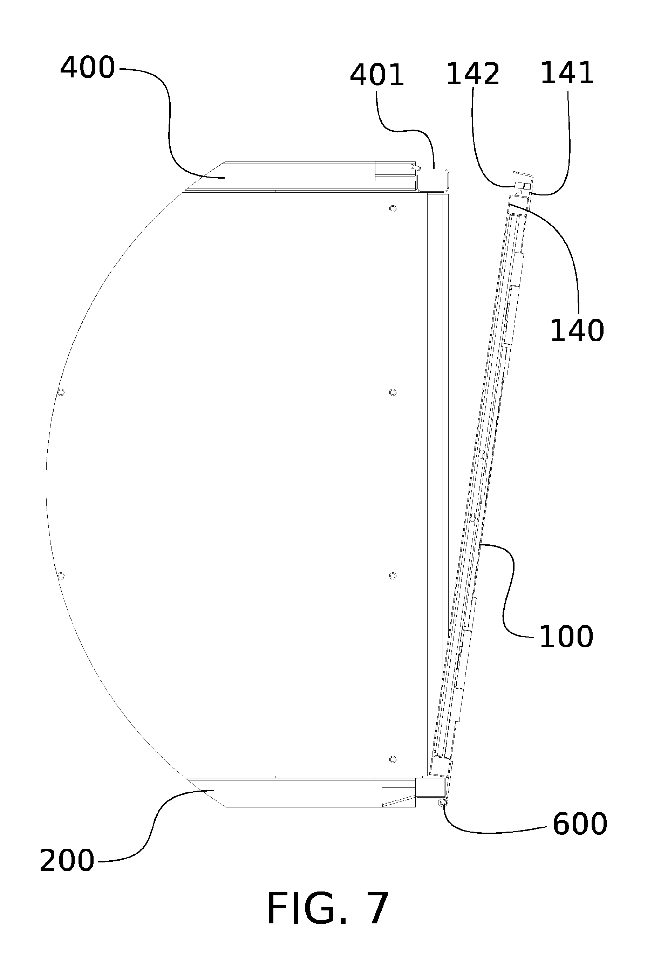

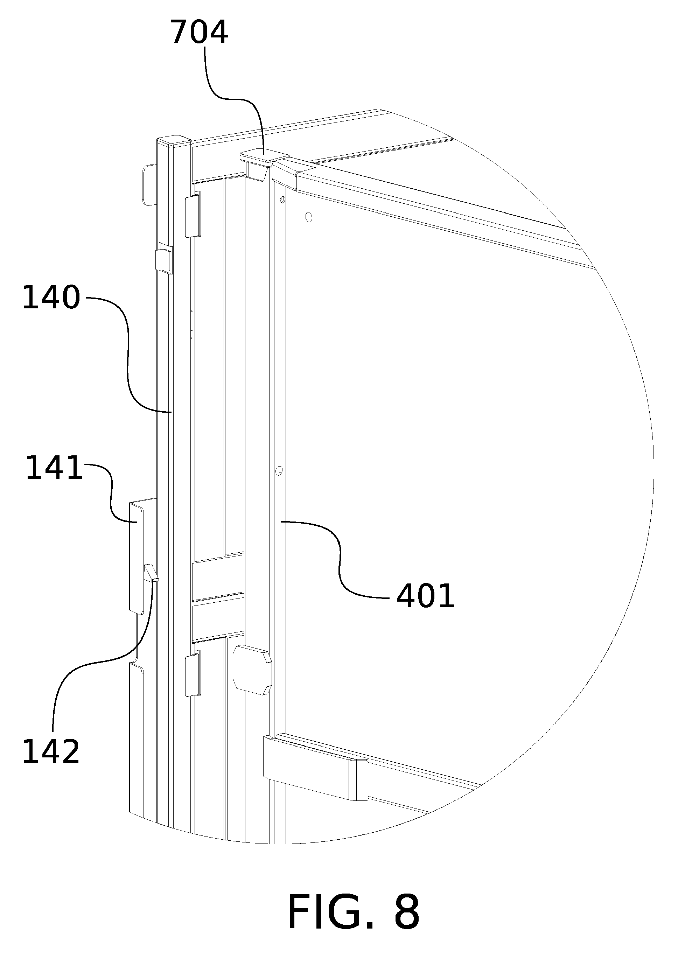

FIGURE 6 shows the slide 701 in the locking position. As may be seen, the opening 703 of the slide 701 is not aligned with the opening 402 of the profile 401. In this position, the edge of the opening 703 of slide 701 rests against the locking member 142 of the door 100. When the slide 701 is moved up into the releasing position, the edge of the opening 703 of slide 701 is detached from the locking member 142, whereby the openings 703, 402 are aligned and the locking member 142 is free to be retracted through the aligned openings 703, 402 for opening the door 100 (FIGURES 7 and 8). For a proper grip, the locking member 142 is a protrusion that terminates to a claw, such as shown in FIGURE 6. The claw is designed to grip the edge of the opening 703 of the slide 700 in the locking position thereof. As is visible from FIGURES 1, 5 and 6 to 8, the door frame 140 includes a laterally extending locking plate 141, from which the locking member 142 extends towards the second side frame section 400 in the closed state of the door 100. The locking plate 141 provides a lateral offset for the locking member 142 from the profile of the door frame 140.

The slide 701 is operated with a know 704, which is visible to the user and set to move the slide 701 inside the front frame profile 401 along its main extending direction. The knob is understood to be a gripping member suitable for manual grabbing. The knob 704 is connected to the slide 701 via a connecting rod 702. The connecting rod 702 which is preferably suspended in respect to the front frame profile 401 such to bias the slide 701 toward the locking position, i.e. downward. The suspension may be established by arranging a tension spring 706 around the connecting rod 702 such that the bottom end is retained by the edge of the slide 701 and the top end is retained by a spring limiter 705. The spring limiter 705 is fixed to the profile 401 and hollow to allow the connecting rod 702 to reciprocate through. The bottom end of the slide 701 is connected to another connecting rod 708, which terminates to a stopper (not shown) that limits the movement of the slide 701 along the profile 401, i.e. vertically. The door release mechanism 700 is therefore adapted to only allow the door 100 to open, when the operator pulls the knob 704 upward, which has the benefit of preventing unintentional opening.

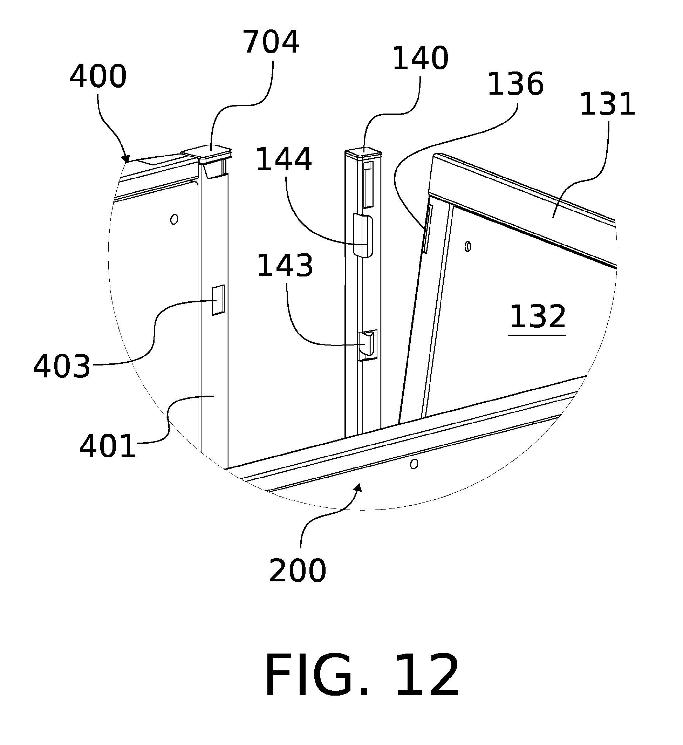

As a further safety measure, the door frame 140 may be provided with an additional safety catch 143. The safety catch (not shown in entirety) includes an elongated body portion having at both ends a blade extending in a deviated angle in respect to the body portion. The safety catch is a biased latch inside the door frame such that the blades are visible through openings provided to the side of the door profile 140 as shown in FIGURE 5 and FIGURE 12, which shows a detail view of the relationship between a partially opened door with a partially opened top panel. The safety catch 143 is rotatably connected to the door frame 140 and biased such to protrude out of the openings provided to both lateral sides of the vertical section of the door frame. The safety catch 143 is configured to toggle between:
- a first position, in which the safety catch 143 locks the third panel 130 to the door frame 140 and releases the door frame 140 from the front profile 401 of the second side frame section 400, and
- a second position, in which the safety catch 143 locks the door frame 140 to the front profile 401 of the second side frame section 400 and releases the third panel 130 from the door frame 140.

The safety catch 143 therefore prevents the door 100 from opening, if the third panel 130 is in the opened orientation, i.e. the safety catch 143 prevents the situation depicted in FIGURE 12. This additional safety measure prevents the door frame 140, which may not include a top frame section connecting the vertically extending side, i.e. lateral, sections, to be bent when operating the door.

FIGURE 12 shows a further safety feature for protecting the door frame 140 from being bent during handling of the door 100 in the open sate. An anchor 144 is provided to the door frame 140 to extend toward and engage with a corresponding slot 136 provided to the frame 131 of the third panel 130. The anchor 144 includes a section, which extends in the opening direction of the third panel 130 such to prevent the door frame 140 from being detached from the third panel 130 in the closed state. A similar function could be achieved with a different panel release mechanism design (not shown). It is also to be understood that also the second panel 120 may have a similar anchor mechanism.

Overall it is to be pointed out that the container may be provided with any plurality of such panels depicted above and arranged to the door frame. It is especially foreseeable to provide four, five or six such panels, for example, in a superposed and chained arrangement.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**REFERENCE SIGNS LIST**

| NUMBER | FEATURE | NUMBER | FEATURE |
|---|---|---|---|
| 1 | container | 144 | anchor |
| 100 | door | 200 | first side frame section |
| 110 | first panel | 201 | front frame profile |
| 112 | cover | 300 | back frame section |
| 120 | second panel | 400 | second side frame section |
| 121 | frame | 401 | front frame profile |
| 122 | cover | 402 | opening |
| 123 | hinge | 403 | opening |
| 130 | third panel | 600 | hinge |
| 131 | frame | 700 | door release mechanism |
| 132 | cover | 701 | slide ("push bar") |
| 133 | hinge | 702 | connecting rod |
| 134 | affixer | 703 | opening |
| 135 | release latch | 704 | knob |
| 136 | slot | 705 | spring limiter |
| 140 | door frame | 706 | spring |
| 141 | locking plate | 707 | connector |
| 142 | locking member, e.g. locking protrusion | 708 | connecting rod |
| 143 | safety catch | | |

## Claims

1. A container (1) comprising:
- a first side frame section (200),
- a door (100), and
- a hinge (600), which is configured to pivot the door (100) in respect to the side frame section (200) about a vertical axis for turning the door (100) between a closed state and an open state,
**characterized in that** the door (100) comprises:
- a door frame (140), which is connected to the side frame section (200) of the container (1) through the hinge (600),
- a first panel (110), which is fixed to the door frame (140), and
- a second panel (120), which is pivotably connected to the first panel (110) and configured to be articulated about a horizontal rotation axis between:
∘ a closed orientation and
∘ an open orientation.

2. The container (1) according to claim 1, wherein:
- in the closed orientation, the second panel (120) is delimited by the door frame (140), and wherein
- in the open orientation, the second panel (120) is folded to flank the first panel (110).

3. The container (1) according to any of the preceding claims, wherein the first side frame section (200) comprises a front end, such as a front frame profile (201), from which the first side frame section (200) is connected to the door frame (140) through the hinge (600).

4. The container (1) according to any of the preceding claims, wherein the second panel (120) comprises a hinge (123), which is configured to hinge the second panel (120) in respect to the first panel (110) such to articulate the second panel (120) about said horizontal rotation axis.

5. The container (1) according to any of the preceding claims, wherein the second panel (120) comprises:
- a frame (121),
- a cover (122) delimited by the frame (121) of the panel (120), and
- a panel release mechanism configured to releasably engage with the door frame (140) for securing the second panel (120) to and releasing it from the closed orientation.

6. The container (1) according to claim 5, wherein:
- the panel release mechanism of the second panel (120) comprises a movable affixer (134), and wherein
- the door frame (140) comprises a corresponding opening for releasably receiving and holding the affixer (134) of the second panel (120) for securing the second panel (120) to and releasing it from the closed orientation.

7. The container (1) according to any of the preceding claims, wherein:
- the second panel (120) is hinged to the first panel (110) from a first end of the second panel (120),
- the roll container (1) comprises a third panel (130), which is pivotably connected to a second end of the second panel (120) opposing the first end, wherein the third panel is configured to be articulated in respect to the second panel (120) about a horizontal rotation axis between:
• a closed orientation and
• an open orientation.

8. The container (1) according to claim 7, wherein the third panel (130) is similar to the second panel (120).

9. The container (1) according to any of the preceding claims, wherein the roll container (1) comprises:
- a second side frame section (400) opposing the first side frame section (200), which second side frame section (400) comprises a front end, such as a front frame profile (401),
- a locking member (142) provided to the door frame (140), and
- a door release mechanism (700) arranged to the front end of the second side frame section (400) such to be manipulated between a locking position and a releasing position, which door release mechanism (700) comprises a counterpart member (701), which is configured to:
• engage with the locking member (142) of the door frame (140) in the locking position of the door release mechanism (700) and to
• release the locking member (142) of the door frame (140) in the releasing position of the door release mechanism (700).

10. The container (1) according to any of the preceding claims 1 to 8, wherein the container (1) comprises:
- a second side frame section (400) opposing the first side frame section (200), which second side frame section (400) comprises a front frame profile (401) having at least one opening (142) on the envelope surface thereof,
- a locking protrusion (142) extending from the door frame (140),
- a door release mechanism (700), which comprises a slide (701), which:
• is arranged at least partly inside the front frame profile (401) of the second frame section (400) so as to be moved in the main extending direction of the front frame profile (401) between a locking position and a releasing position,
• comprises an opening (703), which is configured to align with the opening (402) of the front frame profile (401) of the second side frame section (400) in the releasing position and be deviated from the opening (402) of the front frame profile (401) of the second side frame section (400) in the locking position.

11. The container (1) according to claim 10, wherein the locking protrusion (142) extends from the door frame (140) through the opening (402) of the front frame profile (401) of the second side frame section (400) and the aligned opening (703) of the door release mechanism (700) in the released position thereof.

12. The container (1) according to claim 10 or 11, wherein the locking protrusion (142) terminates to a claw, which is configured to grip the edge of the opening (703) of the slide (700) in the locking position thereof.

13. The container (1) according to any of the preceding claims 10 to 12, wherein the door release mechanism (700) comprises a knob (704) for operating the slide (701), which knob (704) is visible to the user and configured to move the slide (701) inside the front frame profile (401) in the main extending direction thereof.

14. The container (1) according to claim 13, wherein the knob (704) is connected to the slide (701) via a connecting rod (702), which is suspended in respect to the front frame profile (401) of the second frame section (400) such to bias the slide (701) toward the locking position.

15. The container (1) according to any of the preceding claims, wherein the container (1) is a roll container, such as a manually propelled roll container.
